# EUROPEAN PATENT SPECIFICATION

(11) **EP 1 795 887 B1**
(45) Date of publication and mention of the grant of the patent: **15.06.2011**
(21) Application number: 06125751.5
(22) Date of filing: 08.12.2006
(51) Int. Cl.: G01N 21/70, C21D 10/00

(54) **Laser shock peening plasma diagnostics sensors for real time process monitoring**
Laserschockverfestigte Plasma- Diagnosesensoren für Echtzeit-Prozessüberwachung
Système capteur de diagnostic du martelage par choc laser pour la surveillance du martelage en temps réel

(30) Priority: 08.12.2005 US 275072
(43) Date of publication of application: 13.06.2007
(73) Proprietor: GENERAL ELECTRIC COMPANY, Schenectady, NY 12345 (US)
(72) Inventor: Benicewicz, Pamela King, Loudonville, OH 12211 (US); Azer, Magdi Naim, Niskayuna, NY 12309 (US); Deaton, Jr., John Broddus, Niskayuna, NY 12309 (US); Wu, Pingfan Peter, Niskayuna, NY 12309 (US); Rockstroh, Todd Jay, Maineville, OH 45039 (US)
(74) Representative: Gray, Thomas

(56) References cited:
- EP-A- 1 528 110
- EP-A- 1 637 616
- US-A- 6 034 768
- US-A- 6 075 593

## Description

### BACKGROUND OF THE INVENTION

The present invention relates generally to measuring the effectiveness of laser shock peening (LSP) and, more particularly, relates to a system and method for monitoring in real time the optical emissions from the plasma formed during the LSP process to access the amount of laser energy being coupled into the part being processed.

Laser shock peening or laser shock processing, is a process whereby a shockwave is impinged upon a surface of a part or workpiece and produces a region of compressive residual stress in an outer layer of the part. It is well understood that the compressive residual stress in the outer layer of the processed part increases the service life of a processed part with respect to cyclic fatigue failure. Understandably, the ability of the part to withstand fatigue failure is dependent, in part, on the quality of the coupling of the shockwave with the part. That is, if the shockwave is not appropriately coupled at the surface of the part, the quality of the peen of the resultant peening process is detrimentally affected.

During the laser shock peening process, a high intensity pulsed laser beam is focused onto a metal part to be processed. Preferably, an absorption layer placed in contact with the part being processed and a transparent containment layer positioned adjacent to the part are used to improve the coupling of the energy of the laser beam with the part being processed. The focused laser beam passes through the containment layer, usually water, and strikes the absorption layer. The absorption layer is generally formed of a thin layer or coating of tape, paint, or ink. The interaction of the high peak power laser beam with the absorption layer generates a plasma. The expanding plasma creates a shockwave which the containment layer reflects back into the part, ensuring that a substantial portion of the initial shockwave is directed toward the part being processed and thereby enhances the coupling of the shockwave generated by the energy of the laser with the part. Understandably, breakdown of the containment layer, breakthrough of the absorption layer, and undesired laser fluence values can result in undesired, unexpected, and possibly unacceptable coupling of the laser energy with the part.

Current practice of laser shock peening requires extensive destructive testing to ensure that parts being processed achieve a desired processing effect. That is, when many parts are to be processed, a select few of the total number of processed parts will be tested to failure to determine the quality of the remainder of the parts. This type of destructive testing is often time consuming and expensive to implement and execute. Additionally, such testing provides no indication of a real-time, individual peen quality of the part being processed. The failure-tested parts are fully processed prior to any testing. The processing of subsequent parts may then be suspended to allow time to failure test the test parts or continue with the potential of producing parts which do not satisfy quality criteria. Suspending the processing procedure and/or producing subsequent parts which do not satisfy quality criteria detrimentally affects process efficiency.

Other systems and processes attempt to improve the process efficiency through sample part processing. That is, these systems process a much smaller part or coupon and determine the quality of the coupling through testing of the coupon. These approaches improve the real-time aspect of quality control; however they must also associate the quality of the test coupon coupling with coupling of an actual part being processed. Such testing can result in misleading data characterizations and associations when the data acquired is not associated with an actual part being processed. Still other systems non-destructively test the quality of the coupling through measurements of characteristics of a processed part such as surface hardness values and peen depth and shape data. Such approaches are incapable of accounting for real-time variations in the coupling quality and analyze only a very few of many peen sites. Yet other systems monitor parameters and data acquired during processing of a part, destructively test a select group of parts, and compare the extensive data acquired during processing with the data of the destructively tested parts.

Although this approach allows for a quality comparison of each part of a group of processed parts, the process still requires the destructive testing of a select group of parts to acquire the control quality data. Although these systems provide and enhance real-time monitoring of the peening process as compared to failure testing of parts, the systems fail to provide the ability to determine the cause of the undesired results in a real-time basis or peen performance. That is, the cause of poor peen quality associated with any of laser fluence, containment layer breakdown, or absorption layer breakthrough cannot be determined in a real-time, on a peen-by-peen basis.

Therefore, it would be desirable to design a system and method capable of non-destructively determining the real-time peen quality and the cause of unacceptable peen events during laser shock processing.

US 6,075,593 discloses a method for quality assurance of a laser shock peening process wherein the spectral light intensity associated with a plasma produced by the peening is recorded. The data is then analyzed to determine an instantaneous black body plasma spectrum and from that spectrum the plasma temperature over time is determined, which is then used to provide statistical control of the peening process.

EP 1 637 616 relates to the real time monitoring of a laser shock peening process by analyzing laser plasma emissions.

### BRIEF DESCRIPTION OF THE INVENTION

The present invention provides a system capable of real-time monitoring of a laser shock peening process that solves the aforementioned problems. The processor includes an input configured to receive a signal from the detector that is indicative of an emission associated with a laser shock event at a titanium workpiece. The processor is connected to the input and is configured to determine a cause of an unacceptable peen event from the signal associated with the emission.

According to one aspect of the present invention, there is provided a peen quality monitoring system according to claim 1.

Various other features, objects and advantages of the present invention will be made apparent from the following detailed description and the drawings, illustrating embodiments by way of example only.

### BRIEF DESCRIPTION OF THE DRAWINGS

The drawings illustrate several embodiments presently contemplated for carrying out the invention.

In the drawings:
Fig. 1 is a comparative laser shock peening system having a monitoring system.
Fig. 2 is another embodiment of a laser shock peening monitoring system according to the present invention.
Fig. 3 is a laser shock peening monitoring system according to a preferred embodiment of the present invention.
Fig. 4 is a graphical representation of an exemplary spectrum acquirable with the comparative system shown in Figs. 1.
Fig. 5 is a graphical representation of laser fluence and detector outputs associated with the peak emission shown in Fig. 4.
Fig. 6 is a graphical representation of an exemplary spectrum acquired by laser beam impingement upon a part absent a containment layer and an absorption layer.
Fig. 7 is a graphical representation of an exemplary spectrum acquired by laser beam impingement upon a part having a water containment layer and no absorption layer.

### DETAILED DESCRIPTION OF THE PREFERRED EMBODIMENT

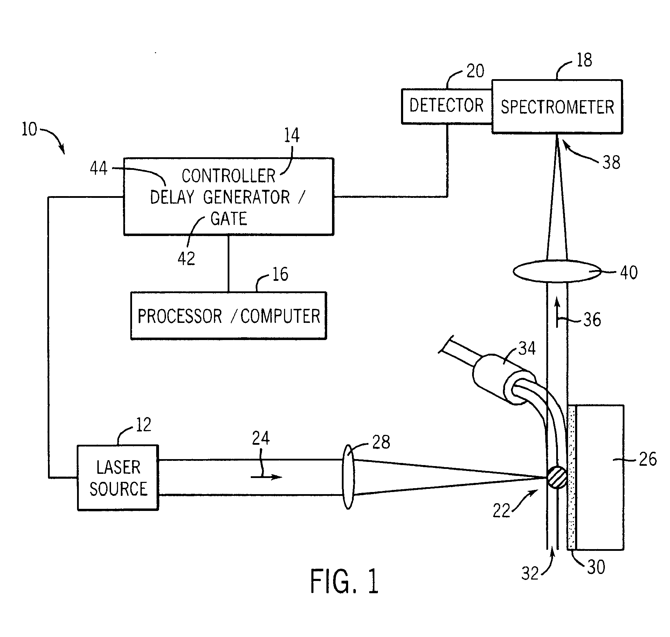

Fig. 1 shows a laser shock peening system 10 according to a comparative embodiment. System 10 includes a laser source 12 connected to a controller 14 having a computer 16 connected thereto. A transistor/transistor logic (TTL) pulse from the laser triggers the detector controller, indicating initiation of a laser pulse and a peen event. Preferably, laser source 12 is configured to generate a pulse of approximately 2-20 Joules and capable of sustaining a desired pulse for a duration of approximately 20 microseconds. Understandably, such a laser source is merely exemplary and other laser sources configured to generate variable pulse energies for variable durations are envisioned.

A spectrometer 18 having a detector 20 is connected to controller 14 and is positioned with an entrance slit directed toward an intended peen site 22. A laser beam, indicated by arrow 24, is emitted from laser source 12 and directed toward a workpiece 26. Laser beam 24 is focused upon workpiece 26 by a lens 28. An absorption layer 30 and a containment layer 32 maintained in relatively close proximity to workpiece 26 are positioned between laser source 12 and workpiece 26. Absorption layer 30 is commonly a black paint or tape layer that is applied directly to workpiece 26. Containment layer 32 is a transparent material, often water, and is positioned adjacent absorption layer 30 between absorption layer 30 and laser source 12. A nozzle 34 directs the flow of containment layer 32 across absorption layer 30.

During operation of system 10, laser beam 24 is focused upon absorption layer 30 by lens 28. Impingement of laser beam 24 upon absorption layer 30 vaporizes at least a portion of absorption layer 30 thereby generating a high temperature plasma. As the plasma is generated and expands, shockwaves propagate generally radially outward from the site of impingement of laser beam 24 with absorption layer 30. Containment layer 32 directs a portion of the shock wave which propagates away from workpiece 26 back toward workpiece 26. Containment layer 32 thereby increases the efficiency of which the energy of laser beam 24 is utilized to generate the residual compressive stress in workpiece 26 associated with a peen.

As the plasma generated by the impingement of laser beam 24 upon absorptive layer 30 forms and cools, it emits light associated with the de-excitation of the plasma constituents, i.e. highly energetic electrons and ions, excited ions, and atoms. The spectra generated from the laser-induced plasma plume vary, depending significantly upon the observation time after impact of the laser pulse. Thus, specific emissions from the plasma can be detected by controlling an observation time after a peening event has occurred. The spectrum detected during the first tens of nanoseconds after a peening event is generally a featureless continuum. At later times, the ionic emission lines associated with the peening event dominate the spectrum and at even later times after a peening event, atomic emission lines dominate the spectrum. Accordingly, by using time-resolved spectroscopy and gating detector 20 to a specific delay following plasma initiation, spectra of interest can be acquired. By obtaining spectra only during a desired interval after the creation of the plasma, the effect of undesired or background emissions during the spectral analysis can be minimized since the early large continuum emission can be eliminated. The signal to background noise is maximized by choosing a gate duration approximately equal to the lifetime of the emission of interest.

The plasma plume, indicated by arrow 36, created during a laser shock process is imaged onto an entrance slit 38 of spectrometer 18 by a collection lens 40. Light 36 passed into spectrometer 18 is impinged upon, and dispersed by, a diffraction grating (not shown) thereby forming a spectrum specific to the material being vaporized during the laser peening process. The dispersed spectrum is directed onto a face (not shown) of detector 20. Detector 20 is gated by a gate 42 of controller 14 to be turned ON for a specified time when a spectrum of interest is acquired. Controller 14 includes a delay generator 44 such that operation of detector 20 is delayed until a spectrum of interest is emitted by the plasma. Delay generator 44 of controller 14 is connected to laser source 12 and detector 20 such that the turning ON of detector 20 is synchronized with generation of laser beam 24. Gate 42 of controller 14 ensures that detector 20 is turned ON/OFF at a desired time and for a desired duration after the generation of laser beam 24. Using this spectrometer/ICCD detector pair, time-resolved emissions from the plasma are identified which are well-correlated to changes in laser fluence and process failure mechanisms such as absorption layer breakthrough and containment layer breakdown, and provide a real-time monitor of how much laser energy is coupled into the workpiece. Such monitoring of the laser shock process provides for real-time, on-the-fly, monitoring and detection of the laser shock peening process. Accordingly, the delay generated gated control of detector 20 allows individual peen event monitoring of laser fluence, performance of containment layer 32, and/or performance of absorption layer 30 associated with each peen event. As such, system 10 provides real-time monitoring of peen performance.

Detector 20 is connected to controller 14 such that a signal communicated by detector 20 to controller 14 is processed and sent to computer 16. Software resident on computer 16 analyzes the data received and presents a spectrum acquired by the detector. As discussed further below, computer 16 compares the acquired spectrum to a desired spectrum and therefrom, can determine not only the quality of each peen but a peen performance or a cause of an unacceptable peen event.

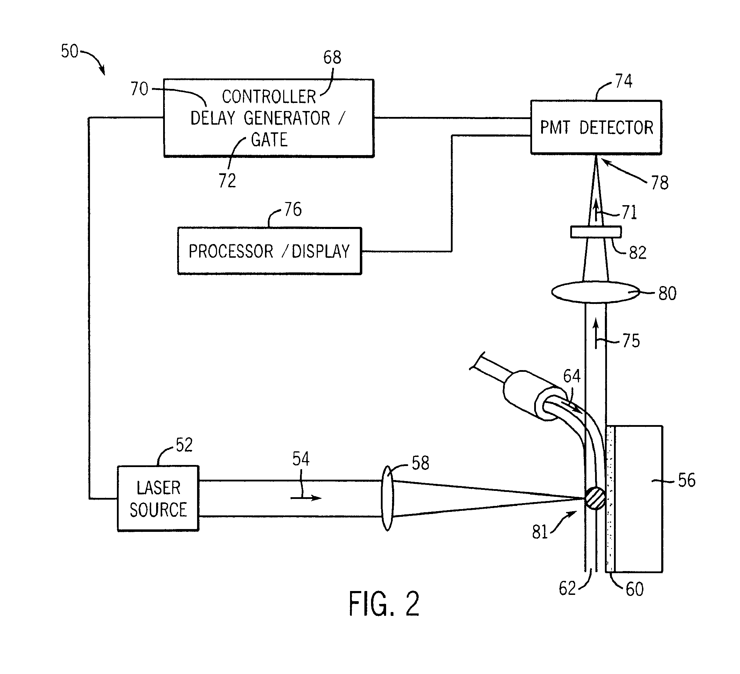

Once a spectrally and temporally resolved signal or signals has been identified that correlates with a LSP process parameter or failure mechanism, the spectrometer/ICCD detector pair can be replaced with a detector/filter pair that acquires only the emissions of interest. Fig. 2 shows another embodiment of a system 50 according to the present invention having such a detector/filter pair.

As shown in Fig. 2, a laser source 52 emits a laser beam, indicated by arrow 54, at a titanium workpiece 56. A lens 58 focuses laser beam 54 upon absorption layer 60 which is applied to workpiece 56. A containment layer 62 of transparent material, preferably a flow of water, indicated by arrow 64, is located adjacent to absorption layer 60 and workpiece 56. A controller 68 includes a delay generator 70 and a control gate 72 which is synchronized to laser source 52 and a photomultiplier tube PMT-based detector 74. A display 76 is connected to detector 74 and is configured to display a signal indicative of an amount of light of a particular wavelength, indicated by arrow 71, received by detector 74. Detector 74 includes an input aperture 78 generally directed toward a peen site 81. A lens 80 is positioned between input aperture 78 and peen site 81 and images the plasma plume generated at peen site 81 upon input aperture 78.

A filter 82 is disposed between lens 80 and input aperture 78 of detector 74. For monitoring laser fluence coupled to the workpiece and containment layer breakdown events, filter 82 is a 3 nm full-width at half-maximum narrow bandpass filter which is centered at approximately 455 nm. The delay of the detector is preferably 2 µs and the gate width 10 µs. For monitoring tape breakthrough, filter 82 is a 10 nm full-width at half-maximum narrow bandpass filter centered at 370 nm. The delay of the detector is preferably 10 µs with a 10 µs gate width. Understandably, due to overlap in the delay and the gate width associated with the respective events, the detector/filter pair acquires data specific to one of laser fluence coupled to the workpiece and water or containment layer breakdown per a peen event. It is further understood that the gate and duration times are merely preferred and other gate and duration times, generally ranging from 1 nanosecond to 100 microseconds, are envisioned and within the scope of the claims.

Filter 82 is selected to allow clearly identifiable plasma emissions associated with specific laser shock processing events, such as laser fluence, containment layer 62 breakdown, and/or absorption layer 60 breakthrough events, to pass to detector 74. Understandably, filter 82 can be selected to allow passage of light of any wavelength wherein the emissions of interest are clearly identifiable. Gate 72 of controller 68 turns detector 74 ON/OFF to output a signal to display 76 indicative of plasma emissions 75 acquired at an interval of interest as defined by generation of specific emissions associated with laser fluence, containment layer 62 breakdown, and/or absorption layer 60 breakthrough. Accordingly, system 50, like system 10, is configured to monitor peen performance or performance of the laser shock process in a real-time, peen specific manner.

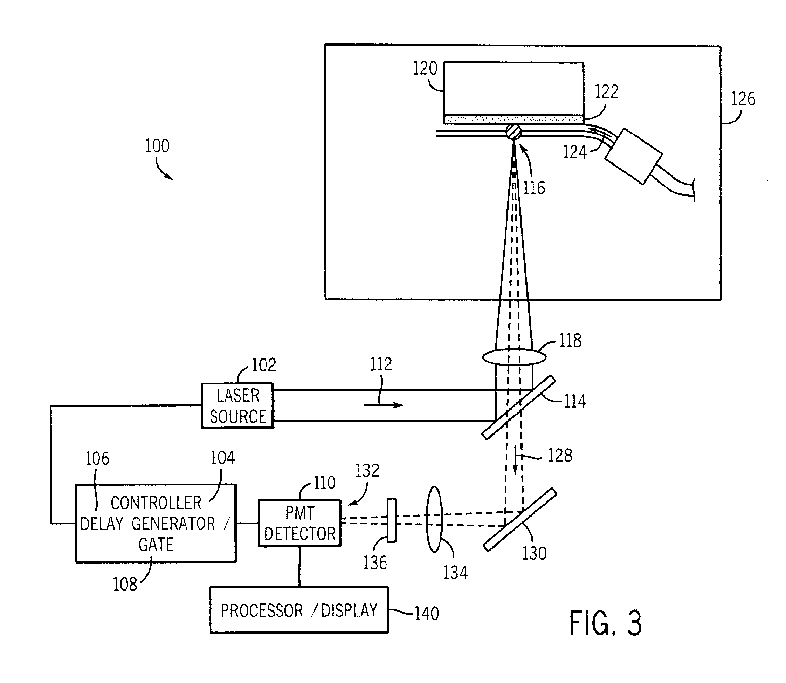

Fig. 3 shows yet another, preferred, embodiment of the present invention. As shown in Fig. 3, a laser shock processing system 100 includes a laser source 102 triggering a detector controller 104 having a delay generator 106 and a control gate 108. Controller 104 is connected to a photomultiplier tube (PMT) based detector 110. A laser beam, indicated by arrow 112, is emitted from laser source 102 and directed upon a mirror 114 configured to steer laser beam 112 toward a peen site 116. A lens 118 focuses laser beam 112 upon peen site 116. Peen site 116 is generally proximate a titanium workpiece 120 having an absorption layer 122 and a containment layer, commonly a flow of water and indicated by arrow 124, located adjacent thereto. An enclosure 126 generally isolates the processing environment to prevent debris and splashing water associated with a peening event from escaping the enclosure.

The plasma plume generated by the laser shock peening event, indicated by arrow 128, passes beyond enclosure 126, through lens 118 and mirror 114, and is directed upon another mirror 130 which steers the light 128 toward detector 110. Light 128 is imaged and filtered upon an inlet aperture 132 of detector 110 by another lens 134 and a filter 136, respectively. For monitoring laser fluence coupled to the workpiece and containment layer breakdown events, filter 136 is a 3 nm full-width at half-maximum narrow bandpass filter which is centered at approximately 455 nm and configured to allow light of specific wavelengths to pass therethrough to detector 110. The delay of the detector is preferably 2 µs with a gate width of 10 µs. For monitoring tape breakthrough, filter 136 is a 10 nm full-width at half-maximum narrow bandpass filter centered at 370 nm. The delay of the detector is preferably 10 µs with a 10 µs gate width. Likewise, the delay and gate duration are selected to acquire an emission of interest and can range from 1 nanosecond to 100 microseconds, or any delay and gate duration where an emission of interest may be emitted from the peening event. A display 140 is connected to detector 110 to provide real-time output indicative of individual peen quality. System 100, as compared to systems 10 and 50, requires only one line-of-sight with a peen event to both direct the laser beam thereat and collect the desired plasma light therefrom. Such a system provides for an alternative configuration of the components of the system as well as ensures that both the laser source and the detecting and controlling components can be adequately distanced from the peen event. Additionally, as discussed further below, controller 104, detector 110, and filter 136 cooperate to acquire only desired spectral data associated with laser fluence, containment layer 124 breakdown, and/or absorption layer 122 breakthrough. Accordingly, system 100 is configured to monitor real-time peen quality and allow inadequate peen quality cause identification.

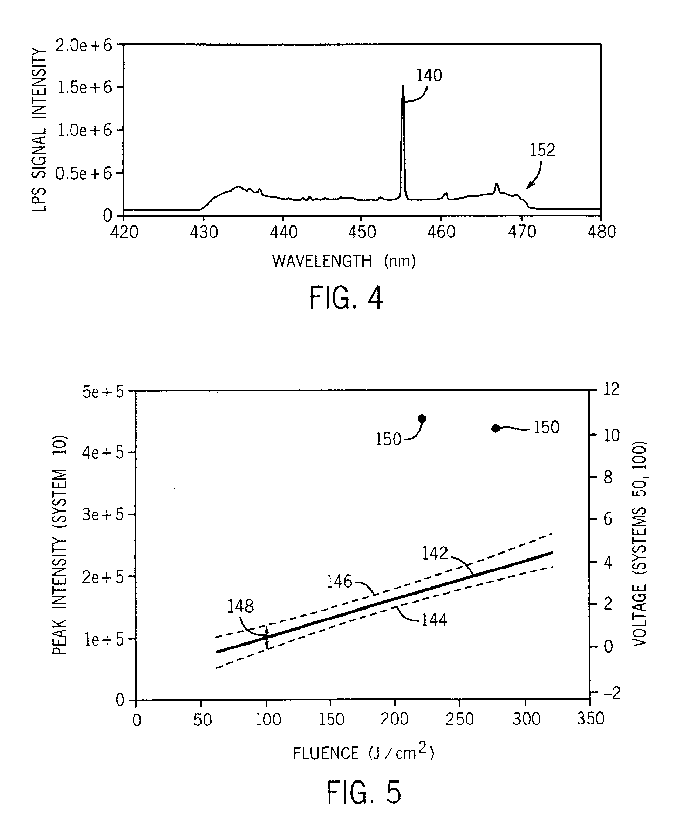

Fig. 4 shows a graphical representation of an acquired spectrum as a function of wavelength examined and laser shock processing signal intensity. As shown in Fig. 4, using system 10 with a preferred delay of 2 µs between the laser pulse impact to detector initialization, a preferred 10 µs gate width activation of the detector, and the laser 12 focused upon a Ti-6-4 sample part with a water containment layer and a absorption layer applied thereto, it has been determined that a peak emission 140, associated with a wavelength of approximately 455.38 nm, is well correlated to laser fluence, containment layer breakdown events, and free from titanium emission in the event of absorption layer breakthrough. Understandably, other identifiable emissions exist which can be associated with the above events. However, with use of a 3 nm full-width half-maximum filter centered at 455 nm, as in systems 50 and 100, the emission associated with peak emission 140 is clearly and expeditiously identifiable.

As shown in Fig. 5, peen signal intensity acquired with system 10 and the voltage signal acquired with systems 50 or 100, are individually well correlated to the laser fluence of the peening event. That is, plotting the peak amplitude associated with peak emission 140 shown in Fig. 4 as a function of laser fluence displays the relatively linear association between the measured peak intensity and the laser fluence associated with the emission at approximately 455 nm. Points lying along curve 142 indicate the occurrence of a desired peen event as a function of laser fluence.

Additionally, values lying on and/or between curves 144 and 146 indicate the occurrence of acceptable but below desired peen quality events. Understandably, curves 144 and 146 are definable to provide an acceptable range 148 of deviation of detector signal from the detector signal associated with a desired peen event as a function of laser fluence, represented by curve 142. Accordingly, curves 144 and 146 quantify the range of acceptable detector signal values that result in acceptable but less than desired peen events, as a function of laser fluence. In other words, associating a peak amplitude or PMT signal of an individual peen peak emission 140 with the laser fluence associated with the peen event, results lying beyond curves 144 and 146 indicate unacceptable peen events on a peen-by-peen basis as a function of laser fluence.

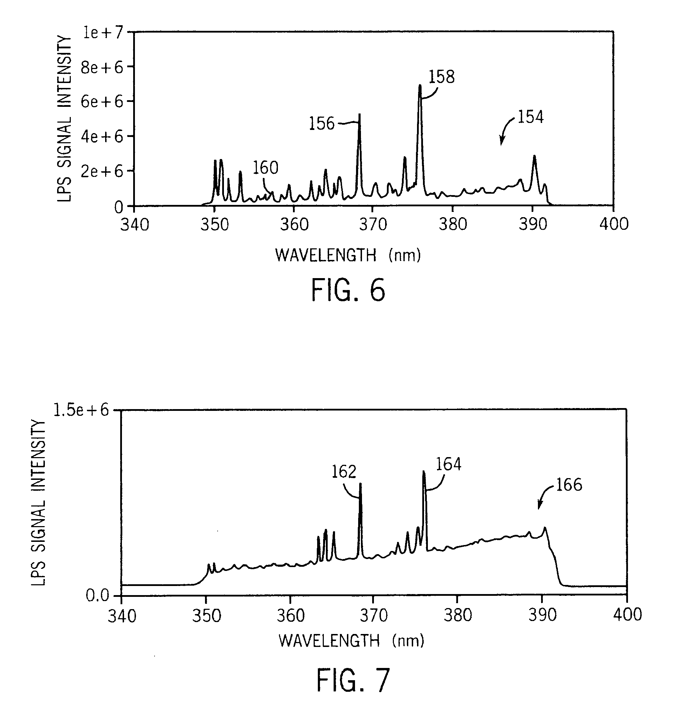

Systems 10, 50, and 100 also monitor real-time performance of the containment layer for each peen event. For system 10, a comparison of the peak amplitude of the emissions acquired by the spectrometer at the wavelength of approximately 455 nm for each peen event resulted in a plurality of closely associated peak emissions for each of a plurality of laser fluence values. Comparatively, with systems 50 and 100, comparing a plurality of peen events at a plurality of laser fluencies against a maximum voltage measured on an oscilloscope display generated a plurality of closely associated peen events for the respective fluences. Each system presented several outliers 150, or values beyond curves 144 and 146 of Fig. 6.

Comparing a spectrum acquired during production of a desired peen event, such as that shown in Fig. 4, against the respective spectrum acquired during production of the outliers 150, indicated that the spectrum acquired during production of each of the outliers presented the emission of interest over a relatively large background spectrum as compared to the background spectrum 152 shown in Fig. 4. A comparison of the spectrum associated with outliers 150 with a spectrum acquired by intentional containment layer breakdown at the respective laser fluences indicated that the outliers were indications of peen events which experienced containment layer breakdown. Values associated with outliers 150, which lie above curve 146 in Fig. 5, have either a peak intensity as determined using system 10 or a PMT voltage as obtained with systems 50 or 100, are indicative of containment layer breakdown.

That is, the laser energy was dissipated by plasma formation in the containment layer and did not reach the part surface thereby detrimentally effecting peen quality. Understandably, in comparable parts, peen depth, or part deformation, is directly related, in part, to laser fluence. Even at lower laser fluence values, for spectra generated at the same laser fluence, a spectrum having a large background signal over a desired signal would be indicative of a lower quality peen event in that a portion of the energy of the laser is lost to the formation of plasma in the containment layer rather than being directed to the part. Accordingly, examination of the emission spectrum provides a determination of containment layer performance.

Similarly, a series of spectra were acquired with the comparative system 10 from peen events conducted upon a bare part and a series of peen events conducted on a part having only a containment layer. As shown in Fig. 6, a spectrum 154 acquired after impingement of the laser beam upon a bare part includes two peak emissions 156, 158 over a somewhat active background signal 160. Emission peaks 162, 164 of the spectrum 166 shown in Fig. 7 are indicative of the same peak emissions 156, 158 shown in the spectrum 154 of Fig. 6. A comparison of spectrum 154, shown in Fig. 6, and spectrum 166, shown in Fig. 7, displays that peak emissions 156, 158 and 162, 164 are associated with emissions from the bare part during a peening event with and without a containment layer and thus are indicative of absorption layer breakthrough. That is, the comparison of the spectrum detected from a part without an absorption layer and with and without a water containment layer clearly identifies those emissions associated with emission of the elemental composition of the part.

For spectra acquired during a specific peening event during a peening process, if the spectrum includes the peak emissions 156, 158 or 162, 164, an absorption layer breakthrough has occurred. During processing of a part, detection of such an emission would be indicative of an absorption layer breakthrough resulting in an undesirable peen effect. If the spectrum is acquired and the peak emissions are not present, desired performance of the absorption layer has been confirmed. Understandably, the values of the peak emissions associated with absorption layer breakthrough will vary depending on the spectral emissions associated with the material of the part being processed. That is, other part materials may have emissions which are more easily identifiable than the exemplary dual peak emission shown in Figs. 6 and 7. Of the spectra analyzed, it has been determined that the emissions having a wavelength of approximately 370 nm were easily identifiable as titanium emissions. Understandably, other emissions were detected which indicate the presence of the part in the plasma emission; however, the emissions at approximately 370 nm were the most readily identifiable as associated with absorption layer breakthrough. System 10 utilizes spectra in its determination of absorption layer breakthrough events. For systems 50 and 100, the spectrometer/ICCD detector pair is replaced with a narrow bandpass optical filter centered at 370 nm (in this specific case) and a gated PMT. A large increase in the PMT signal monitoring absorption layer breakthrough is indicative of a absorption layer breakthrough event.

Each of systems 10, 50, and 100 individually provide a laser shock processing system which is configured to monitor any of laser fluence, containment layer breakdown, and absorption layer breakthrough for individual peen events. That is, through acquisition of desired spectra or spectrally filtered light associated with the plasma of a peen event, not only can the quality of the resultant peen be determined, but the cause of undesired peen results is readily determined and corrected. Furthermore, each of systems 10, 50, and 100 could be equipped with an optional database. The optional database could be connected to any of the detector, the processor, and/or the computer of any of systems 10, 50, 100 and configured to record and maintain the emission signal and/or the analysis associated therewith. Accordingly, the database would provide a peen quality history for each of a plurality of peens of a part of a plurality of parts. Furthermore, the database is envisioned to record data associated with a specific emission in the database and associating the data with a peen event of a plurality of peen event and a part of a plurality of parts. Accordingly, systems 10, 50, and 100 are envisioned to both monitor and maintain a history of the quality of each peen event of part.

Therefore, one embodiment of the present invention includes a system for monitoring a quality of a laser shock peening of a titanium workpiece as stated in claim 1.

A laser source is constructed to initiate a peen event by emission of a laser beam directed at a titanium workpiece and the detector is configured to acquire a signal associated with the peen event. The processor is connected to the detector and is configured to determine a peen quality from the acquired signal and a cause of an unacceptable peen quality.

The present invention has been described in terms of the preferred embodiment, and it is recognized that equivalents, alternatives, and modifications, aside from those expressly stated, are possible and within the scope of the appending claims.

## Claims

1. A system for monitoring a quality of a laser shock peening of a titanium workpiece (56,120) with an absorption layer (60,122) applied thereto and using a water containment layer (62,124), comprising:
an input configured to receive a signal from a detector (74,110) indicative of an emission (75,128) associated with a laser shock event at a workpiece (56,120); and
a processor (76,140) connected to the input and configured to monitor for an unacceptable peen event in real time; wherein
said processor is configured to compare the acquired emission generated by a laser shock event at a workpiece to a desired emission to give an indication of peen performance; and
said processor is configured to compare the acquired emission generated by a laser shock event at a workpiece to a desired emission to give an indication of the cause of an undesired peen result
the system further comprising a controller (68,104) connected to a laser source (52,102) and configured to gate operation of the detector (74,110) to a selected duration of laser caused plasma emission time, the controller further comprising a delay generator (70,106) operably connected to the detector (74,110) to delay actuation of the detector (74,110) for a desired time after a laser beam (54,112) emitted from the laser source (52,102) impacts the workpiece (56,120) for each peen of a plurality of peens; **characterized in that** the system further comprises a filter (82, 136) disposed between a location of the laser shock event and the detector (74,110) and wherein the signal is a light emission of interest which passes through the filter (82, 136) wherein the filter (82, 136) is further defined as at least one of a 3 nm FWHM filter centered at 455 nm and a 10 nm FWHM filter centered at 370 nm.

2. The system of claim 1, wherein the processor (76,140) further gives an indication of the cause of the undesired peen result as at least one of a containment layer (62,124) breakdown, an absorption layer (60,122) breakthrough, and an unacceptable laser fluence based on the emission (75,128).

3. The system of claim 1 or 2, wherein the detector (74,110) is a filtered input photomultiplier tube and the emission (75,128) is a light emission of a particular wavelength.

4. The sysstem of any of the preceding claims, wherein the detector is a spectrometer having an intensified charge coupled device connected thereto and the spectrometer acquires a spectrum from the emission.

5. The system of any of the preceding claims, wherein the desired time is at least about 1 nanosecond after laser beam impact at the workpiece (56,120) and wherein the delay generator (70,106) causes the detector (74,110) to acquire the signal for a duration of at least 10 microseconds.

6. The system of claim 1 connected to a display device (76,140) and wherein the processor (76,140) is configured to display the cause of the undesirable peen result on the display device (76,140).

## Patentansprüche

1. System zur Überwachung einer Qualität einer Laserschockbestrahlung eines Titan-Werkstückes (56, 120) mit einer darauf aufgebrachten Absorptionsschicht (60, 122) und unter Anwendung einer Wassereinschlussschicht (62, 124), aufweisend:
einen Eingang, der für den Empfang eines Signals aus einem Detektor (74, 110) konfiguriert ist, das eine Emission (75, 128) in Verbindung mit einem Laserschockereignis an einem Werkstück (56, 120) anzeigt; und
einen Prozessor (76, 140), der mit dem Eingang verbunden und dafür konfiguriert ist, eine Überwachung hinsichtlich eines unzulässigen Bestrahlungsereignisses in Echtzeit durchzuführen; wobei
der Prozessor dafür konfiguriert ist, die erfasste Emission, die durch ein Laserschockereignis an einem Werkstück erzeugt wird, mit einer erwünschten Emission zu vergleichen, um eine Anzeige für das Bestrahlungsbetriebsverhalten zu liefern; und
der Prozessor dafür konfiguriert ist, die erfasste Emission, die durch ein Laserschockereignis an einem Werkstück erzeugt wird, mit einer erwünschten Emission zu vergleichen, um eine Anzeige für die Ursache eines unerwünschten Bestrahlungsergebnisses zu liefern;
das System ferner eine Steuervorrichtung (68, 104) aufweist, die mit einer Laserquelle (52, 102) verbunden und dafür konfiguriert ist, den Betrieb des Detektors (74, 110) auf eine ausgewählte Dauer einer vom Laser bewirkten Plasmaemissionszeit zu begrenzen, wobei die Steuervorrichtung ferner einen Verzögerungsgenerator (70, 106) aufweist, der funktionell mit dem Detektor (74, 110) verbunden ist, um eine Aktivierung des Detektors (74, 110) für eine gewünschte Zeit zu verzögern, nachdem ein von der Laserquelle (52, 102) emittierter Laserstrahl (54, 112) auf das Werkstück (56, 120) für jedes Bestrahlungsereignis von mehreren Bestrahlungsereignissen auftrifft; **dadurch gekennzeichnet, dass** das System ferner ein Filter (82, 136) aufweist, das zwischen einem Ort des Laserschockereignisses und dem Detektor (74, 110) angeordnet ist, und wobei das Signal eine interessierende Lichtemission ist, welche das Filter (82, 136) passiert, wobei das Filter (82, 136) ferner als wenigstens eines von einem 3 mm FWHM-Filter mit einem Zentrum bei 455 nm und einem 10 nm FWHM-Filter mit einem Zentrum bei 370 nm ist.

2. System nach Anspruch 1, wobei der Prozessor (76, 140) ferner einen Hinweis auf die Ursache des unerwünschten Bestrahlungsergebnisses wenigstens in Form von einem von einem Zusammenbruch der Einschlussschicht (62, 124), einem Zusammenbruch der Absorptionsschicht (60, 124) und einem unzulässigen Laserenergiefluss auf der Basis der Emission (75, 128) liefert.

3. System nach Anspruch 1 oder 2, wobei der Detektor (74, 110) eine Photomultiplier-Röhre mit gefiltertem Eingang ist, und die Emission (75, 128) eine Lichtemission mit spezieller Wellenlänge ist.

4. System nach einem der vorstehenden Ansprüche, wobei der Detektor ein Spektrometer mit einem damit verbundenen ladungsgekoppelten Bauelement mit Verstärkung ist, und das Spektrometer ein Spektrum aus der Emission aufnimmt.

5. System nach einem der vorstehenden Ansprüche, wobei die gewünschte Zeit wenigstens etwa 1 Nanosekunde nach dem Auftreffen des Laserstrahls auf dem Werkstück (56, 120) ist, und wobei der Verzögerungsgenerator (70, 106) den Detektor (74, 110) veranlasst, das Signal für eine Dauer von wenigstens 10 Mikrosekunden zu erfassen.

6. System nach Anspruch 1, das mit einer Anzeigevorrichtung (76, 140) verbunden ist, und wobei der Prozessor (76, 140) dafür konfiguriert ist, die Ursache des unerwünschten Bestrahlungsergebnisses auf der Anzeigevorrichtung (76, 140) anzuzeigen.

## Revendications

1. Système de surveillance de la qualité d'un martelage par choc laser d'une pièce de fabrication en titane (56, 120) avec une couche d'absorption (60, 122) appliquée à celle-ci et utilisant une couche de confinement d'eau (62, 124), comprenant :
une entrée configurée pour recevoir un signal provenant d'un détecteur (74, 110) indiquant une émission (75, 128) associée à un événement de choc laser sur une pièce de fabrication (56, 120) ; et
un processeur (76, 140) connecté à l'entrée et configuré pour surveiller en temps réel un événement de martelage inacceptable ; dans lequel
ledit processeur est configuré pour comparer l'émission acquise générée par un événement de choc laser sur une pièce de fabrication à une émission désirée pour fournir une indication de la performance du martelage ; et
ledit processeur est configuré pour comparer l'émission acquise générée par un événement de choc laser sur une pièce de fabrication à une émission désirée pour fournir une indication de la cause d'un résultat de martelage non désiré
le système comprenant en outre
un contrôleur (68, 104) connecté à une source laser (52, 102) et configuré pour activer le fonctionnement du détecteur (74, 110) pendant une durée sélectionnée du temps d'émission d'un plasma provoqué par laser, le contrôleur comprenant en outre un générateur de retard (70, 106) connecté fonctionnellement au détecteur (74, 110) pour retarder l'actionnement du détecteur (74, 110) pendant un temps désiré après qu'un faisceau laser (54, 112) émis par la source laser (52, 102) a frappé la pièce de fabrication (56, 120) pour chaque martelage d'une pluralité de martelages ; **caractérisé en ce que** le système comprend en outre un filtre (82, 136) disposé entre l'emplacement de l'événement de choc laser et le détecteur (74, 110) et dans lequel le signal est une émission de lumière d'intérêt traversant le filtre (82, 136) dans lequel le filtre (82, 136) est défini en outre comme étant au moins un filtre parmi un filtre FWHM de 3 nm centré à 455 nm et un filtre FWHM de 10 nm centré à 370 nm.

2. Système selon la revendication 1, dans lequel le processeur (76, 140) fournit en outre une indication de la cause du résultat de martelage non désiré comme étant au moins un événement parmi une rupture de la couche de confinement (62, 124), une rupture de la couche d'absorption (60, 122) et une fluence laser inacceptable basée sur l'émission (75, 128).

3. Système selon la revendication 1 ou 2, dans lequel le détecteur (74, 110) est un tube photomultiplicateur dont l'entrée est filtrée et l'émission (75, 128) est une émission de lumière d'une longueur d'onde particulière.

4. Système selon l'une quelconque des revendications précédentes, dans lequel le détecteur est un spectromètre auquel est connecté un dispositif à couplage de charges intensifié et le spectromètre effectue l'acquisition d'un spectre à partir de l'émission.

5. Système selon l'une quelconque des revendications précédentes, dans lequel le temps désiré est au moins d'environ une nanoseconde après que le faisceau laser a frappé la pièce de fabrication (56, 120) et dans lequel le générateur de retard (70, 106) provoque l'acquisition du signal par le détecteur (74, 110) pendant une durée d'au moins 10 microsecondes.

6. Système selon la revendication 1, connecté à un dispositif d'affichage (76, 140) et dans lequel le processeur (76, 140) est configuré pour afficher sur le dispositif d'affichage (76, 140) la cause du résultat de martelage indésirable.
